# FASCICULE DE BREVET EUROPEEN

(11) **EP 0 797 552 B1**
(45) Date de publication et mention de la délivrance du brevet: **20.10.1999**
(21) Numéro de dépôt: 95942086.0
(22) Date de dépôt: 08.12.1995
(51) Int. Cl.: C04B 24/00, B02C 23/06

(54) **PROCEDE DE BROYAGE DU CLINKER**
VERFAHREN ZUM MAHLEN VON KLINKER
CLINKER GRINDING METHOD

(30) Priorité: 16.12.1994 EP 94870196; 31.10.1995 EP 95870120
(43) Date de publication de la demande: 01.10.1997
(73) Titulaire: Solutia Europe N.V./S.A., 1150 Brussels (BE); Holderchem AG, CH-8050 Zürich (CH)
(72) Inventeur: AKSTINAT, Manfred, CH-8050 Zürich (CH); VETOIS, Marcel, F-94140 Alfortville (FR); KUCZYNSKI, Krzysztof, B-1640 Rhode-St. Genèse (BE)
(74) Mandataire: Colens, Alain
(86) Numéro de dépôt international: EP9504850
(87) Numéro de publication internationale: WO9618587

(56) Documents cités:
- FR-A- 1 376 001
- FR-A- 1 509 449
- FR-A- 2 103 355
- FR-A- 2 485 949
- FR-A- 2 596 754
- CHEMICAL ABSTRACTS, vol. 100, no. 20, 14 Mai 1984 Columbus, Ohio, US; abstract no. 161083c, XP002000257 & SU,A,1 071 592 (ALL-UNION SCIENTIFIC RESEARCH INSTITUTE OF THE CEMENT INDUSTRY)

## Description

Cette invention concerne un procédé de broyage de clinker en présence d'un additif de mouture phosphonaté, particulièrement un aminopolyphosphonate. Dans une exécution préférée, l'additif de broyage est constitué d'un système binaire comprenant un additif de broyage phosphonaté et un agent de mouture non-phosphonaté conventionnel.

La technologie de broyage du clinker en cimenterie utilise de plus en plus fréquemment les presses à rouleaux, seules ou en complément des broyeurs à boulets de la technique antérieure. Les presses à rouleaux offrent des avantages économiques par rapport aux broyeurs tubulaires bien connus. Il est généralement admis que les ciments issus des broyeurs, en particulier des presses à rouleaux, devraient être modifiés de manière à faciliter leur application. Scheibe et al, Silikattechnik 24 (1970) pp 11-17 décrit une série d'additives de broyage pour ciment incluant des amines préférées et des acides phosphoniques préférés. Toutes les recherches conduites en vue d'atteindre ses objectifs n'ont, à ce jour, pas généré une solution économiquement viable.

Les ciments, indépendemment de la technologie de broyage utilisée, présentent dans des proportions diverses des insuffisances, notamment une granulométrie discontinue avec une large distribution de diametres des particules de ciment. Le broyage du clinker se répercute sur les propriétés physiques du ciment, notamment la fluidité, la maniabilité et le compactage resultant du transport ou d'un stockage prolongé. L'incorporation de ces ciments dans les bétons affecte leurs resistances mécaniques. La quantité d'eau nécessaire pour l'hydratation pendant la fabrication et la mise en oeuvre des bétons est généralement proportionnelle à la granulométrie du ciment. Ceci pourrait engendrer des modifications de comportement rhéologique et de performances physiques et mécaniques des betons mis en oeuvre. En plus, ces ciments génèrent : des défauts d'aspect des parements en béton; des teintes non-homogènes; une concentration d'éléments grossiers à la surface produisant des marbrures et des auréoles de coloration plus foncée; et des phénomènes de ségrégation et de bullage à la surface.

Nous avons maintenant découvert que la fabrication du ciment, toutes technologies de broyage confondues en particulier la technologie des presses à rouleaux, peut être améliorée par l'utilisation d'un additif phosphonaté lors du broyage du clinker. Ces améliorations peuvent se traduire au niveau du procédé par des rendements économiquement supérieur, une longévité accrue de l'équipement de broyage ainsi qu'une meilleure maniabilité du ciment, y inclus une résistance améliorée à la compaction. Le ciment ainsi produit a une granulométrie optimisée, particulièrement plus uniforme, et se caractérise notamment par des propriétés mécaniques supérieures pour des propriétés comparables de surface.

Sauf indication contraire dans ce qui suit, l'expression "%" signifie "pourcent massique".

La présente invention concerne un procédé pour le broyage du clinker, facultativement ensemble avec des additifs minéraux, conventionnels dans le domaine de la technologie objet de l'invention, tels que : le gypse, la pierre à chaux, puzzolane (cendres vulcaniques et /ou poussières) et la silice finement divisée (silica fumes), en présence d'un additif phosphonaté de broyage. En particulier ce procédé est caractérisé par le fait que l'additif de broyage est un phosphonate choisi parmi les formules suivantes : 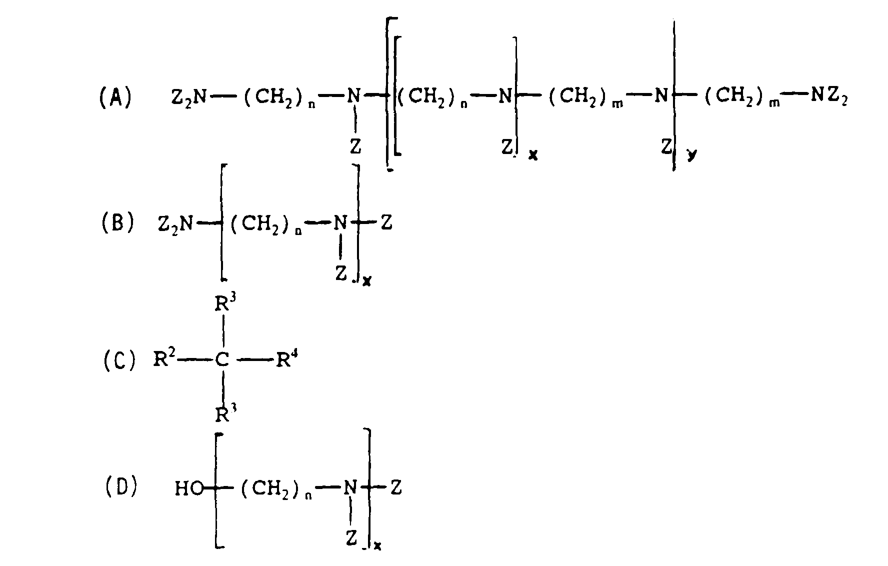 (E) N-oxydes des phosphonates ayant une formule conforme à (A) à (D) inclus, ou des mélanges de ces phosphonates, dans laquelle
Z est -CHR¹PO₃R₂;
R est H, CH₃, C₂H₅ ou M;
M est un ion métal ou ammonium;
R¹ est H, CH₃, CR₃, C₆H₅, SO₃H, CH₂COOH;
R² est alkyle ayant de 1 à 5 inclus atomes de carbone;
R³ est PO₃R₂;
R⁴ est OH, NH₂, N(R¹)₂;
n est 2-6, de préférence 2-4;
m est 2-6, de préférence 2-4;
x est 0-6, de préférence 0-3;
y est 0-6, de préférence 0-2;
l'additif représentant de 0,001 % à 2 % par rapport au poids sec du clinker.

Dans une exécution préférée, le procédé de broyage requiert l'utilisation d'un additif de broyage phosphonaté en combinaison avec un agent de mouture non-phosphonaté, tel que les agents de mouture ou agents de broyage conventionnels. Une préférence particulière de cette invention concerne l'utilisation des additifs de broyage ci-dessus dans un 5 procédé de fabrication incluant des presses à rouleaux.

Le clinker, sortant du four, est majoritairement constitué de calcium silicate, calcium aluminate and calcium alumino ferrite. Il se présente sous forme d'agglomérats compacts. Le clinker sortant du four peut être, le cas échéant, précalibré par concassage, avant d'être introduit dans la station de broyage.

L'additif de broyage peut être ajouté au clinker avant ou pendant l'opération de broyage. La quantité de l'additif de broyage peut être variée en tenant compte de la composition minérale du clinker, notamment en fonction de la quantité de C3A et/ou calcium alumino ferrite (C4AF). L'optimisation d'additifs à ajouter se fait à l'aide de mesures de routine. La stabilité thermique des additifs de broyage phosphonatés fait que ces composés peuvent, contraire aux additifs conventionnels tel que les matières ioniques e.g. carboxylates, être ajoutés au clinker sortant du silo à temperature élevée.

L'additif de broyage peut être dosé par des moyens conventionnels bien connus dans l'industrie cimentière. Par exemple, l'additif peut être ajouté sous forme liquide à une concentration de 1 % à 30 %, de préférence 2 % à 10 %, généralement dans l'eau, par atomisation. L'additif peut également être ajouté au clinker à l'état solide finement divisé.

L'additif de broyage phosphonaté est utilisé dans une quantité de 0.001 % à 2 %, de préférence de 0.02 % à 1 % par rapport au poids sec de clinker.

L'additif phosphonaté peut être représenté par un composé choisi parmi les formules suivantes; 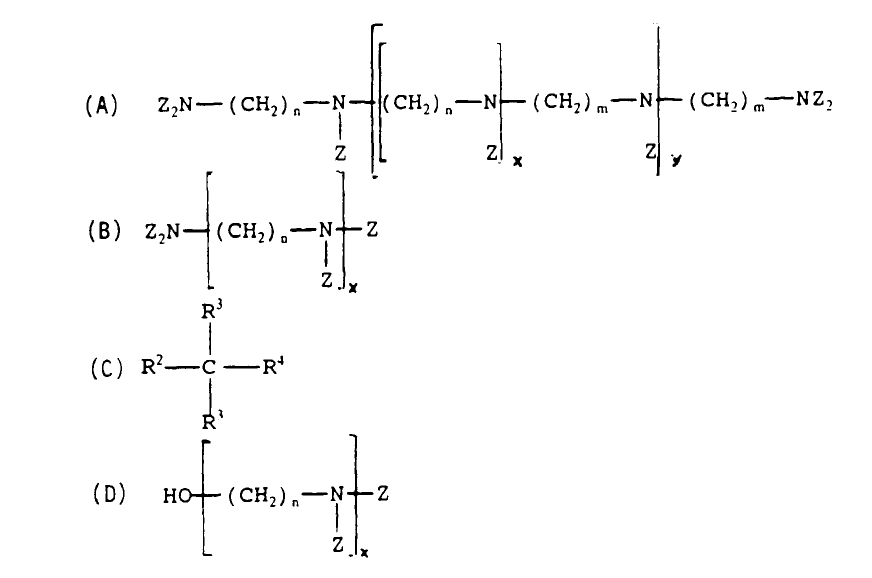 (E) N-oxydes des phosphonates ayant une formule conforme à (A) à (D) inclus dans laquelle
Z est -CHR¹PO₃R₂;
R est H, CH₃, C₂H₅ ou M;
M est un ion métal ou ammonium;
R¹ est H, CH₃, CR₃, C₆H₅, SO₃H, CH₂COOH;
R² est alkyle ayant de 1 à 5 inclus atomes de carbone;
R³ est PO₃R₂;
R⁴ est OH, NH₂, N(R¹)₂;
n est 2-6, de préférence 2-4;
m est 2-6, de préférence 2-4;
x est 0-6, de préférence 0-3;
y est 0-6, de préférence 0-2;
l'additif représentant de 0,001 % à 2 % par rapport au poids sec du clinker.

Des additifs de broyage phosphonatés préférés correspondent à la formule (A) dans laquelle n=2, m=2, x=0 et y=0. Particulièrement préférés sont le diethylene-triaminepentamethylène phosphonate, hepta sodium et le sel mono sodium d'amino tris (acide methylène phosphonique)-N-oxide.

Dans une autre exécution préférée, l'additif de broyage est représenté par un système binaire comprenant l'additif phosphonaté décrit ci-dessus et un agent de mouture non-phosphonaté conventionnel. L'agent phosphonaté dans ce système représente de 0.001 % à 2 %, de préférence de 0.02 % à 1 % par rapport au poids sec de clinker. L'agent non-phosphonaté dans ce système binaire représente de 0.01 % à 5 % par rapport au poids sec de clinker. L'additif phosphonaté et l'agent non-phosphonaté sont fréquemment utilisés dans une proportion pondérale de 20:80 à 95:5, de préférence de 40:60 à 70:30.

L'agent de mouture non-phosphonaté peut être représenté par tous les agents de mouture et de broyage généralement connus dans le domaine de l'industrie du ciment. Des exemples typiques de ces agents sont : le chlorure de sodium; des sels de lignosulfonates; des sels de naphthalènesulfonates; α- ou β- polynaphthalènesulfonates et ses sels; les polycarboxylates; des sels de vinylnaphthalènesulfonates; des anti-agglomérants tels les suies, les cendres et le charbon finement divisés ayant un diamètre de particules entre 1 et 80 micromètres; di- et tri-éthanolamines et leurs sels; les acides carboxyliques; les polyglycols et les polysaccharides.

Dans le cas où l'additif est représenté par un système binaire, le dosage s'effectue selon les méthodes décrites pour l'additif phosphonaté.

Le clinker contient fréquemment, en plus des ingrédients essentiels de cette invention, d'autres agents auxiliaires dans des quantités allant jusqu'à 7 % pour modifier certaines propriétés d'une façon généralement connue. Des exemples de tels auxiliaires sont le gypse (sulfate de calcium), les hemihydrates de calcium, l'anhydride de calcium et les phospogypses.

### Exemples.

On a procédé à des tests afin de comparer les addidifs de broyage selon la présente invention avec des additifs conventionnels.

Les compositions des additifs de broyage sont les suivants:

| | |
|---|---|
| VP-CEM 1 | 30% eau/ 70% triéthanolamine |
| VP-CEM 2 | SPE 9413 (100%)⁽¹⁾ |
| VP-CEM 3 | 61, 6% eau/ 20,0% triéthanolamine 10% diéthylèneglycol / 8,4% SPE 9417 ⁽²⁾ |

| | |
|---|---|
| (1) sel de diéthylènetriamine pentaméthylène phosphonate, hepta sodium | |
| (2) sel d'aminotris (acide méthylène phosphonique) - N-oxyde, mono sodium | |

Deux types différents de ciment Portland ont été utilisés, à savoir:

| | |
|---|---|
| Clincker 1 | C3A +/- 1% / C4AF +/- 20% |
| Clincker 2 | C3A +/- 1% / C4AF +/- 7% |

Les tests de broyage ont été effectués avec un équipement de laboratoire, dans lesquels:

On vaporise un additif de broyage, contenant 35% de matière active (% en poids), à une quantité de 0,075% calculée sur la quantité de clincker (100%), sur un mélange de 9500 g de clincker et 500 g de gypse, tous deux broyés jusqu'à un diamètre de particules variant de 3 à 10 µm (µm=micromètre c'est-à-dire 10⁻⁶m) .

Le mélange ainsi préparé est traité dans une opération de pré-broyage avec 40 kgs de boulets de broyage de 70mm et 60 kgs de boulets de broyage de 40mm, suivi par une opération de broyage principale en présence de 100 kgs d'aggrégats métalliques en cubes avec des particules présentant des côtés de 70 mm. L'opération de broyage est poursuivie jusqu'à l'obtention de 3.000 et 5.000 Blaine minimum. Les énergies de broyage pour des dimensions de particules de 3.000 et 5.000 Blaine ont été établies comme ci-après:

| Clinker | Additif de broyage | | Energie de broyage kwh/t | | Réduction en énergie % | |
|---|---|---|---|---|---|---|
| | n° | % | 3000 Blaine | 5000 Blaine | 3000 | 5000 |
| 1 | VP-CEM1 | 0,075 | 26,5 | 66,5 | 11 | 18 |
| 1 | VP-CEM2 | 0,075 | 28,3 | 81,0 | 5 | 0 |
| 1 | - | 0 | 29,8 | 81,0 | 0 | 0 |
| 2 | VP-CEM4 | 0,075 | 25,2 | 62,0 | 16 | 24 |
| 2 | VP-CEM3 | 0,075 | 25,6 | 65,9 | 14 | 19 |
| 2 | VP-CEM1 | 0,075 | 27,1 | 63,8 | 9 | 21 |
| 2 | VP-CEM2 | 0,075 | 27,5 | 77,8 | 8 | 4 |
| 2 | - | 0 | 29,9 | 81,2 | 0 | 0 |

### Propriétés de fluidité des ciments.

Détermination de l'effort de cisaillement pour la déformation de poudre de ciment compactée.

Mesures à l'aide d'un analyseur de force de cisaillement circulaire: Schwedes et Schulze, Braunschweig, Allemagne-voir D.Schullze, Aufbereitungs-technik 36 (1994), Nr 10, pp. 524 et suivantes.
Compaction: 30N
Degré de broyage: +/- 5.000 Blaine

Les résultats des tests sont indiqués ci-après:

| | Broyage | Additif | | |
|---|---|---|---|---|
| Clinker | N° | % | Magnitude | Remarque |
| 2 | VP-CEM3 | 0,075 | 2,1 | fluidité accrue |
| 2 | VP-CEM2 | 0,075 | 2,0 | fluidité accrue |
| 2 | VP-CEM4 | 0,075 | 1,8 | fluidité accrue |
| 2 | VP-CEM1 | 0,075 | 1,6 | aucune amélioration sensible de la fluidité |
| 2 | - | 0 | 1,54 | contrôle |

Une magnitude d'au moins 1,8 est représentative d'un avantage significatif au niveau de la fluidité. Les résultats sus-mentionnés montrent que, bien qu'avec des additifs de broyage spécifiques, y compris la version de l'art antérieur VP-CEM1, on obtienne des économies d'énergie de broyage, l'avantage combiné de l'invention peut être généré par l'utilisation de la technologie inventive faisant appel à des additifs de broyage phosphonatés spécifiques.

## Revendications

1. Procédé pour le broyage du clinker en présence d'additifs de broyage caractérisé par le fait que l'additif de broyage est un phosphonate choisi parmi les formules suivantes 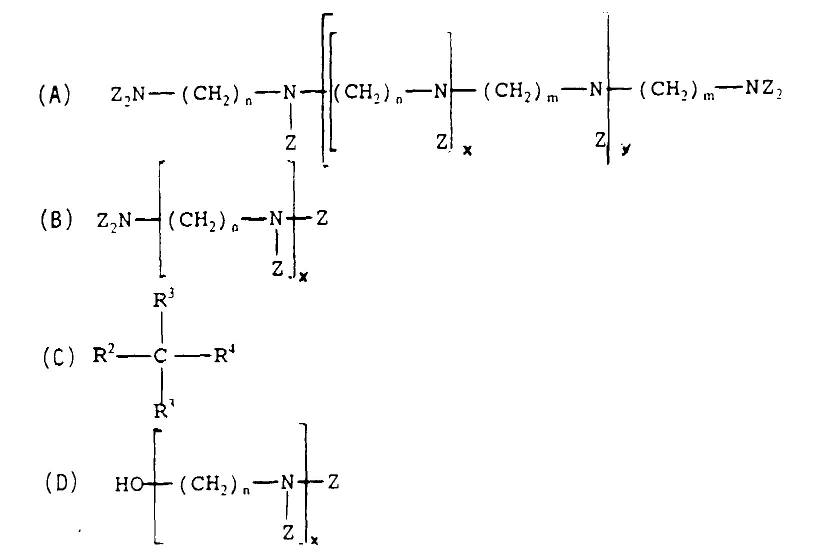 (E) N-oxydes des phosphonates ayant une formule conforme à (A) à (D) inclus, ou des mélanges de ces phosphonates, dans laquelle
Z est -CHR¹PO₃R₂;
R est H, CH₃, C₂H₅ ou M;
M est un ion métal ou ammonium;
R¹ est H, CH₃, CR₃, C₆H₅, SO₃H, CH₂OOH;
R² est alkyle ayant de 1 à 5 inclus atomes de carbone;
R³ est PO₃R₂;
R⁴ est OH, NH₂, N(R¹)₂;
n est 2-6, de préférence 2-4;
m est 2-6, de préférence 2-4;
x est 0-6, de préférence 0-3;
y est 0-6, de préférence 0-2;
l'additif repésentant de 0,001 % à 2 % en poids par rapport au poids sec du clinker.

2. Procédé selon la revendication 1 où l'additif de broyage est utilisé selon un dosage de 0,02 % à 1 % en poids.

3. Procédé selon le revendication 1 où le phosphonate est représenté par la formule (A) dans laquelle n=2; m=2; x=0 et y=0.

4. Procédé selon la revendication 1 dans lequel une solution aqueuse de l'additif de broyage est pulvérisée sur le clinker avant d'entrer dans le circuit de broyage.

5. Procédé selon la revendication 3 où le phosphonate est ajouté sous forme de poudre avant d'entrer dans le circuit de broyage.

6. Procédé pour le broyage du clinker en présence d'un agent de mouture, caractérisé par le fait que l'on ajoute de 0.01 % à 2% en poids par rapport au poids sec du clinker d'un additif au broyage phosphonaté choisi parmi les formules suivantes : 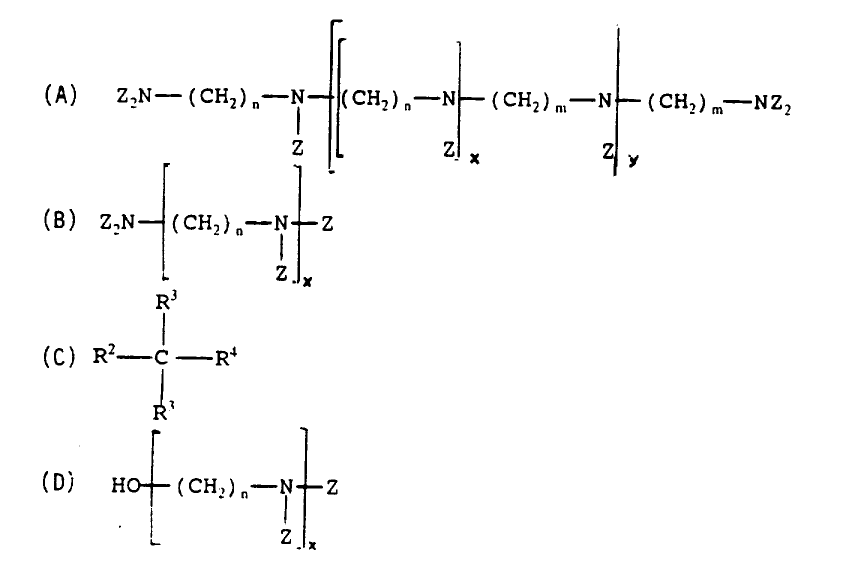 (E) N-oxydes des phosphonates ayant une formule conforme à (A) à (D) inclus, dans laquelle
Z est -CHR¹PO₃R₂;
R est H, CH₃, C₂H₅ ou M;
M est un ion métal ou ammonium;
R¹ est H, CH₃, CR₃, C₆H₅, SO₃H₂;
R² est alkyle ayant de 1 à 5 inclus atomes de carbone;
R³ est PO₃R₂;
R⁴ est OH, NH₂;
n est 2-6, de préférence 2-4;
m est 2-6, de préférence 2-4;
x est 0-6, de préférence 0-3;
y est 0-6, de préférence 0-2;
et de 0,01% à 5% en poids par rapport au poids sec du clinker d'un agent de mouture non-phosphonaté.

7. Procédé selon la revendication 6, dans lequel l'agent de mouture non-phosphonaté est sélectionné à partir : de chlorure de sodium; de sels de ligno sulfonate; de sels de naphtalène sulfonate; de sels d'a- ou β-polynaphtalène sulfonates; des polycarboxylates; de sels de vinylnaphtalène sulfonates; des anti-agglomérants; de sels de di- et triethanolamine; des acides carboxyliques, acétone, des polyglycols et des polysaccharides.

8. Procédé selon des revendications 6 et 7 où le rapport pondéral d'additif avec phosphonate par rapport à l'agent sans phosphonate est de 20:80 à 95:5.

9. Procédé selon la revendication 7 où le rapport pondéral de l'additif avec phosphonate par rapport à l'agent sans phosphonate est de 40:60 à 70:30.

10. Procédé selon la revendication 7 où le phosphonate est choisi parmi : la formule (A) où n=2, m=2, x=0 et y=0 et la formule (B) où x=1 et n=2-6.

## Patentansprüche

1. Verfahren zum Mahlen von Klinker in Gegenwart von Mahlzuschlagstoffen, **dadurch gekennzeichnet,**
**daß** der Mahlzuschlagstoff ein Phosphonat ausgewählt aus einer der folgenden Formeln: 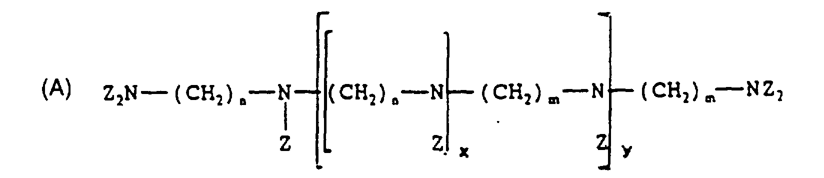 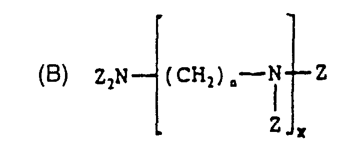 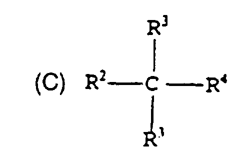 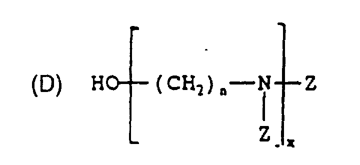 (E) N-Oxide von Phosphonaten gemäß einer der Formeln entsprechend (A) bis (D) einschließlich, oder Mischungen aus diesen Phosphonaten ist, in denen
Z ist -CHR¹PO₃R₂;
R ist H, CH₃, C₂H₅ oder M;
M ist ein Metallion oder Ammonium;
R¹ ist H, CH₃, CR₃, C₅H₅, SO₃H, CH₂OOH;
R² ist ein Alkyl mit einem bis einschließlich fünf Kohlenstoffatomen;
R³ ist PO₃R₂;
R⁴ ist OH, NH₂, N(R¹)₂;
n ist 2-6, vorzugsweise 2-4;
m ist 2-6, vorzugsweise 2-4;
x ist 0-6, vorzugsweise 0-3;
y ist 0-6, vorzugsweise 0-2;
wobei der Zuschlagstoff 0,001 Gew. % bis 2 Gew. % bezogen auf das Trockengewicht des Klinkers repräsentiert.

2. Verfahren nach Anspruch 1, bei dem der Mahlzuschlagstoff in einer Dosierung von 0,02 Gew. % bis 1 Gew. % verwendet wird.

3. Verfahren nach Anspruch 1, bei dem die Phosphonate dargestellt sind entsprechend der Formel (A), in welcher n=2; m=2, x=0 und y= 0 sind.

4. Verfahren nach Anspruch 1, in welchem eine wäßrige Lösung von Mahlzuschlagstoffen auf dem Klinker vor dem Eintrag in den Mahlkreislauf zerstäubt wird.

5. Verfahren nach Anspruch 3, bei dem die Phosponate in Form von Pulver vor dem Eintrag in den Mahlkreislauf zugefügt werden.

6. Verfahren zum Mahlen von Klinker in Gegenwart von Mahlverbesserern, gekennzeichnet durch die Herstellung unter Beifügung von 0,01 Gew. % bis 2 Gew. % bezogen auf das Trockengewicht des Klinkers eines phosphonatisierten Mahlzuschlagstoffes, der aus einer der folgenden Formeln ausgewählt ist: 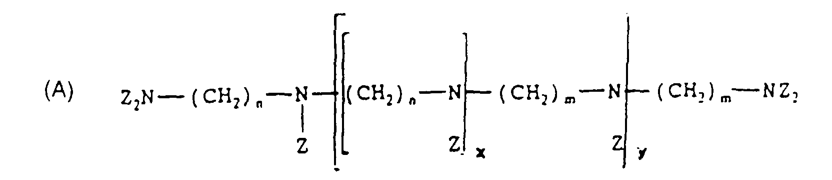 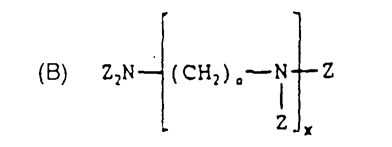 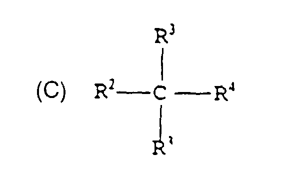 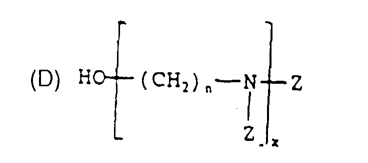 (E) N-Oxide von Phosphonaten gemäß einer der Formeln entsprechend (A) bis (D) einschließlich, in denen
Z ist -CHR¹PO₃R₂;
R ist H, CH₃, C₂H₅ oder M;
M ist ein Metallion oder Ammonium;
R¹ ist H, CH₃, CR₃, C₆H₅, SO₃H, CH₂OOH;
R² ist ein Alkyl mit einem bis einschließlich fünf Kohlenstoffatomen;
R³ ist PO₃R₂;
R⁴ ist OH, NH₂, N(R¹)₂;
n ist 2-6, vorzugsweise 2-4;
m ist 2-6, vorzugsweise 2-4;
x ist 0-6, vorzugsweise 0-3;
y ist 0-6, vorzugsweise 0-2;
und 0,01 Gew. % bis 5 Gew. % bezogen auf das Trockengewicht des Klinkers aus einem nichtphosphonatisierten Mahlverbesserer.

7. Verfahren nach Anspruch 6, in welchem der nichtphosphonatisierte Mahlverbesserer aus folgendem ausgewählt wird: aus Natriumchlorid; aus Salzen eines Ligninsulfonats; aus Salzen eines Naphtalinsulfonats; aus Salzen von α- oder β-Polynaphtalinsulfonaten; aus Polycarboxylaten, aus Salzen von Vinylnaphtalinsulfonaten; aus Anti-Agglomerantien; aus Salzen von Di- oder Triethanolamin; aus Carbonsäuren, aus Aceton, aus Polyglycolen und aus Polysacchariden.

8. Verfahren nach einem der Ansprüche 6 oder 7, bei dem das Gewichtsverhältnis von Zuschlagsstoffen mit Phosponaten zu den Mitteln ohne Phosphonate von 20:80 bis 95:5 liegt.

9. Verfahren nach Anspruch 7, bei dem das Gewichtsverhältnis von Zuschlagsstoffen mit Phosphonaten zu den Mitteln ohne Phosphonate von 40:60 bis 70:30 liegt.

10. Verfahren nach Anspruch 7, bei dem das Phosponat aus einem der folgenden ausgewählt ist: Nach der Formel (A) mit n=2, m=2, x=0 und y=O und nach der Formel (B) mit x=1 und n=2-6.

## Claims

1. A clinker grinding method with grinding additives, characterised in that the grinding additive is a phosphonate chosen from the following formulae: 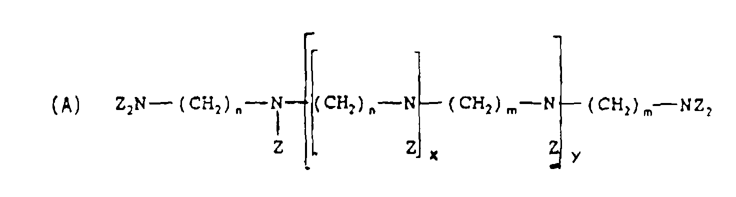 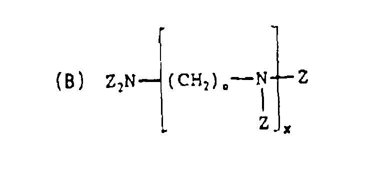 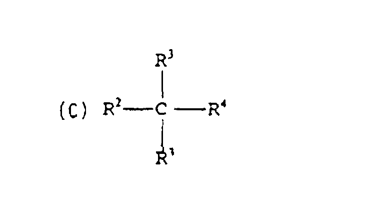 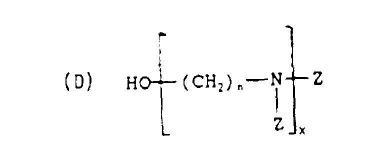 (E) N-oxides of phosphonates having a formula according to (A) to (D) inclusive, or mixtures of these phosphonates, wherein
Z is -CHR¹PO₃R₂;
R is H, CH₃, C₂H₅ or M;
M is a metal ion or ammonium;
R¹ is H, CH₃, CR₃, C₆H₅, SO₃H, CH₂COOH;
R² is an alkyl having from 1 to 5 incl. carbon atoms;
R³ is PO₃R₂;
R⁴ is OH, NH₂, N(R¹)₂;
n is 2-6, preferably 2-4;
m is 2-6, preferably 2-4;
x is 0-6, preferably 0-3;
y is 0-6, preferably 0-2;
the additive representing from 0.001% to 2% relative to the clinker dry weight.

2. A method according to claim 1, wherein the grinding additive is used according to a dosage of 0.02% to 1% in weight.

3. A method according to claim 1, wherein the phosphonate is represented by formula (A) wherein n=2; m=2; x=0 and y=0.

4. A method according to claim 1, wherein an aqueous solution of grinding additive is sprayed onto the clinker before entering the grinding system.

5. A method according to claim 3, wherein the phosphonate is added in powder form before entering the grinding system.

6. A clinker grinding method with a milling agent, characterised in that 0.01 % to 2% in weight relative to the clinker dry weight of phosphonated grinding additive chosen from the following formulae, is added: 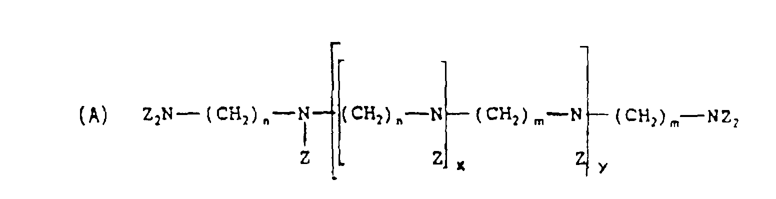 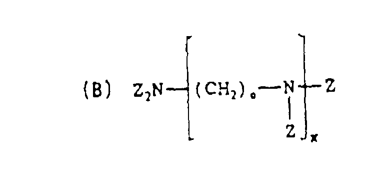 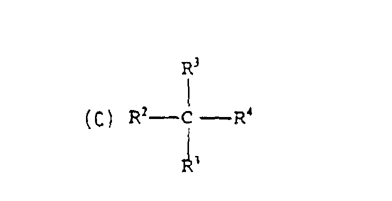 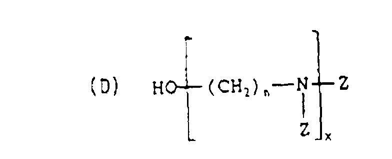 (E) N-oxides of phosphonates having a formula according to (A) to (D) inclusive, wherein
Z is -CHR¹PO₃R₂;
R is H, CH₃, C₂H₅ or M;
M is a metal ion or ammonium;
R¹ is H, CH₃, CR₃, C₆H₅, SO₃H₂;
R² is an alkyl having from 1 to 5 incl. carbon atoms;
R³ is PO₃R₂;
R⁴ is OH, NH₂;
n is 2-6, preferably 2-4;
m is 2-6, preferably 2-4;
x is 0-6, preferably 0-3;
y is 0-6, preferably 0-2;
and from 0.01% to 5% in weight relative to the clinker dry weight, of a non-phosphonated milling agent.

7. A method according to claim 6, wherein the non phosphonated milling agent is selected from: sodium chloride, lignosulfonate salts; naphthalene sulfonate salts; salts of α- or β-polynaphthalene sulfonates; polycarboxylates; salts of vinylnaphthalene sulfonates; anti-binding agents; di- and triethanolamine salts; caboxylic acids, acetone, polyglycols and polysaccharides.

8. A method according to claims 6 and 7, wherein the ratio by weight of the additive with phosphonate to the agent without phosphonate is 20:80 to 95:5.

9. A method according to claim 7, wherein the ratio by weight of the additive with phosphonate to the agent without phosphonate is 40:60 to 70:30.

10. A method according to claim 7, wherein the phosphonate is chosen from: formula (A) where n=2, m=2, x=0 and y=0 and formula (B) where x=1 and n=2-6.
